# DEMANDE DE BREVET EUROPEEN

(11) **EP 3 462 584 A1**
(43) Date de publication de la demande: **03.04.2019**
(21) Numéro de dépôt: 18197894.1
(22) Date de dépôt: 01.10.2018
(51) Int. Cl.: H02M 1/15, H02M 3/335, H02M 1/00, H02M 3/28

(54) **DISPOSITIF D'ALIMENTATION ÉLECTRIQUE POUR UNE PRISE MURALE POURVUE D'UN CONNECTEUR ET PRISE MURALE POURVUE D'UN CONNECTEUR ET COMPRENANT UN TEL DISPOSITIF D'ALIMENTATION ÉLECTRIQUE**

(30) Priorité: 02.10.2017 FR 1759190
(71) Demandeur: Schneider Electric Industries SAS, 92500 Rueil-Malmaison (FR)
(72) Inventeur: BRENGUIER, Jérôme, 38050 Grenoble Cedex 09 (FR)
(74) Mandataire: Lavoix

(57) **Abrégé**

Ce dispositif d'alimentation électrique (10) pour une prise murale comporte :
- un premier convertisseur de puissance (24) continu-continu, comprenant une première sortie (28) et une deuxième sortie (30) ;
- un deuxième convertisseur de puissance (50) continu-continu dont l'entrée est raccordée à la deuxième sortie ;
- un premier condensateur (Cin) connecté sur l'entrée du premier convertisseur, un deuxième condensateur (Cmain) connecté sur la première sortie, un troisième condensateur (Cfilter) connecté sur la deuxième sortie.

La première sortie du premier convertisseur et la sortie (58) du deuxième convertisseur sont connectées en série pour former une sortie (60) du dispositif d'alimentation apte à délivrer une tension continue, le dispositif d'alimentation comprenant au moins un quatrième condensateur (Csmall, Cout) connecté à la sortie du deuxième convertisseur ou à la sortie du dispositif d'alimentation.

## Description

La présente invention concerne un dispositif d'alimentation électrique pour une prise murale pourvue d'un connecteur. L'invention concerne également une prise murale pourvue d'un connecteur et comprenant un tel dispositif d'alimentation électrique.

Il existe des prises électriques murales qui comportent un connecteur de type USB, pour autoriser le rechargement d'appareils de communication mobiles, tels que des téléphones et/ou des tablettes électroniques pourvues d'un connecteur, avec un courant électrique continu.

De telles prises murales sont destinées à être installées dans des bâtiments, par exemple des bâtiments à usage domestique ou encore dans des lieux publics tels que des salles d'attente d'aéroports, des restaurants, des hôtels, et bien d'autres exemples encore.

Ces connecteurs sont généralement des connecteurs USB compatibles avec le standard « USB Power Delivery ». Ils sont ainsi aptes à permettre l'alimentation électrique d'un appareil selon plusieurs niveaux de tension et/ou d'intensité électrique.

A cet effet, ces prises murales sont connectées à un réseau d'alimentation électrique, par exemple domestique, qui leur fournit une tension électrique alternative, généralement monophasée. Les prises incluent un dispositif d'alimentation électrique apte à fournir en sortie, à partir de la tension d'alimentation reçue et à destination du connecteur USB, une tension d'alimentation continue régulée.

Les prises murales connues ne donnent cependant pas entière satisfaction du fait de certaines limitations de leur dispositif d'alimentation.

Typiquement, les alimentations existantes de faible puissance comportent un convertisseur de puissance associé à des composants passifs, tels que des condensateurs.

Par exemple, l'entrée du convertisseur est filtrée à l'aide d'un ou plusieurs condensateurs de capacité élevée, généralement supérieure à plusieurs dizaines de microfarad. Ces condensateurs sont généralement de technologie électrolytique à base d'aluminium, pour des raisons de coût mais aussi au vu des valeurs importantes de capacité requises. Une régulation du convertisseur est assurée à l'aide d'une boucle de rétroaction qui mesure la tension en sortie du convertisseur. Cette boucle peut comporter un opto-coupleur qui participe à l'isolation électrique du convertisseur.

Ces alimentations connues présentent néanmoins un certain nombre d'inconvénients dans le cas présent.

D'une part, ces alimentations présentent un encombrement important, notamment à cause des condensateurs électrolytiques, ce qui n'est pas compatible avec le fait que les dimensions de la prise sont contraintes, notamment par la taille de cavités murales destinées à les recevoir. En effet, pour des raisons de compatibilité avec les bâtiments existants, il est souhaitable que de telles prises murales présentent des dimensions comparables avec celles des prises électriques murales existantes. Or, leurs dimensions sont souvent définies par des normes auxquelles il est difficile de déroger.

D'autre part, ces alimentations sont peu efficaces, de sorte qu'une partie significative de la puissance d'alimentation reçue par le système est dissipée sous forme de chaleur. Or, comme la prise est au moins en partie encastrée dans un mur, elle se trouve dans un espace confiné, ce qui complique l'évacuation de la chaleur dissipée, d'autant plus que les murs des bâtiments comportent typiquement des dispositifs d'isolation thermique, ce qui complique encore plus l'évacuation de la chaleur.

En outre, certains composants de ces alimentations, comme les condensateurs électrolytiques ou l'opto-coupleur, présentent une durée de vie limitée, par exemple dans certains cas inférieure à trois années, ce qui réduit la durée de vie de la prise. Cela est rédhibitoire, car la prise est destinée à être fixée durablement dans un mur et n'est pas prévue pour être remplacée régulièrement. La durée de vie de ces composants est encore plus réduite lorsqu'ils doivent fonctionner sous une température élevée, comme c'est souvent le cas lorsque la prise est fixée à un mur, du fait des difficultés à évacuer la chaleur dissipée, pour les raisons précitées.

C'est à ces inconvénients qu'entend plus particulièrement remédier l'invention, en proposant une alimentation électrique améliorée pour une prise USB murale, présentant une forme compacte, une dissipation thermique limitée et une durée de vie augmentée.

A cet effet, l'invention concerne un dispositif d'alimentation électrique pour une prise murale pourvue d'un connecteur électrique, ce dispositif d'alimentation électrique comportant :
- un redresseur, destiné à être alimenté par une source de tension électrique alternative ;
- un premier convertisseur de puissance continu-continu, comprenant :
   - une entrée connectée à la sortie du redresseur ;
   - une première sortie et une deuxième sortie, la puissance électrique moyenne délivrée sur la deuxième sortie étant inférieure à la puissance électrique moyenne délivrée sur la première sortie ;
- un deuxième convertisseur de puissance continu-continu, l'entrée du deuxième convertisseur de puissance étant raccordée à la deuxième sortie du premier convertisseur de puissance ;
- un premier condensateur de filtrage connecté sur l'entrée du premier convertisseur de puissance, un deuxième condensateur de filtrage connecté sur la première sortie, un troisième condensateur de filtrage connecté sur la deuxième sortie ;
et caractérisé en ce que la première sortie du premier convertisseur de puissance et la sortie du deuxième convertisseur de puissance sont connectées en série pour former une sortie du dispositif d'alimentation électrique apte à délivrer une tension d'alimentation continue, le dispositif d'alimentation électrique comprenant au moins un quatrième condensateur de filtrage connecté soit à la sortie du deuxième convertisseur soit sur la sortie du dispositif d'alimentation électrique.

Grâce à l'invention, l'association des deux convertisseurs de puissance permet d'alimenter le connecteur d'alimentation de façon fiable et en remédiant aux inconvénients précités.

Comme le deuxième convertisseur est connecté sur la deuxième sortie, sur laquelle transite une puissance moyenne qui n'est qu'une faible fraction de la puissance de sortie du premier convertisseur, alors le dimensionnement du deuxième convertisseur peut être réduit. Son encombrement est donc réduit. Les pertes dues à la mise en série de deux convertisseurs sont elles aussi réduites. Ce deuxième convertisseur permet néanmoins de réaliser une régulation suffisamment précise de la tension de sortie, qui permet de supprimer tout ou partie de la boucle de rétroaction communément utilisée.

Grâce à la disposition des deux convertisseurs et aux deux sorties du premier convertisseur, le dispositif d'alimentation peut fournir une tension stabilisée en sortie, même lorsque la tension d'alimentation alternative passe par une valeur nulle. Au contraire, les dispositifs d'alimentation connus y parviennent en stockant de l'énergie dans le condensateur situé à l'entrée du premier convertisseur, ce qui nécessite que ce condensateur ait une capacité élevée. Grâce à l'invention, puisque ce stockage n'est pas nécessaire, il est possible d'utiliser des condensateurs présentant des valeurs de capacité bien moindres, ce qui rend possible l'utilisation de technologies de condensateurs qui sont plus fiables et moins encombrantes que les condensateurs électrolytiques habituellement utilisés.

Selon des aspects avantageux mais non obligatoires de l'invention, un tel dispositif peut incorporer une ou plusieurs des caractéristiques suivantes, prises isolément ou suivant toute combinaison techniquement admissible :
- Le quatrième condensateur de filtrage est connecté sur la sortie du deuxième convertisseur de puissance et en ce que le dispositif d'alimentation électrique comprend un cinquième condensateur de filtrage connecté sur sa sortie.
- Le premier convertisseur de puissance est un convertisseur de type « flyback ».
- Le deuxième convertisseur de puissance est un convertisseur de type « buck » ou de type « buck-boost ».
- Le deuxième convertisseur de puissance est configuré de manière à ce que la tension délivrée en sortie de ce deuxième convertisseur de puissance soit complémentaire à la tension qu'il reçoit sur son entrée.
- Les condensateurs sont des condensateurs de technologie céramique ou de technologie tantale ou de technologie polymère.
- Le premier condensateur présente une capacité inférieure à 1 millifarad.
- La puissance électrique moyenne délivrée sur la deuxième sortie est au moins deux fois inférieure à la puissance électrique moyenne délivrée sur la première sortie, de préférence dix fois inférieure à la puissance électrique moyenne délivrée sur la première sortie.
- Le premier convertisseur de puissance est isolé galvaniquement.
- Le deuxième convertisseur de puissance présente une puissance nominale inférieure à la puissance nominale du premier convertisseur de puissance.

Selon un autre aspect, l'invention concerne une prise murale comprenant un boîtier destiné à être fixé à un mur, un connecteur d'alimentation et un dispositif d'alimentation électrique adapté pour alimenter le connecteur à partir d'une tension alternative fournie par un réseau électrique, le dispositif d'alimentation électrique étant tel que décrit précédemment.

Selon des aspects avantageux mais non obligatoires de l'invention, une telle prise peut incorporer un connecteur d'alimentation de type USB.

L'invention sera mieux comprise et d'autres avantages de celle-ci apparaîtront plus clairement à la lumière de la description qui va suivre, d'un mode de réalisation d'un dispositif d'alimentation électrique donné uniquement à titre d'exemple et faite en référence aux dessins annexés dans lesquels :
- la figure 1 est une représentation schématique d'une prise murale USB conforme à l'invention ;
- la figure 2 est une représentation schématique d'un dispositif d'alimentation électrique de la prise murale de la figure 1 ;
- la figure 3 est une représentation schématique de l'évolution, au cours du temps, de valeurs de tensions électriques au sein du dispositif d'alimentation de la figure 2 lors de son fonctionnement.

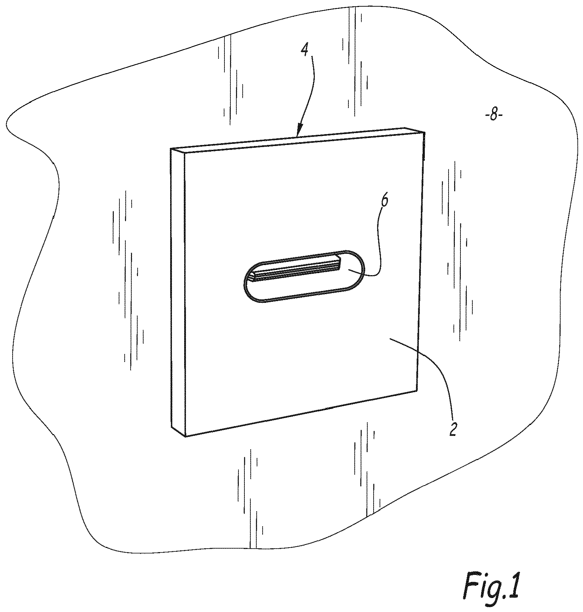

La figure 1 représente une prise murale 2 comprenant un boitier 4 et un connecteur 6 d'alimentation électrique.

La prise 2 est destinée à être fixé sur un mur 8, tel qu'un mur d'un bâtiment. Par exemple, le boitier 4 est destiné à être au moins en partie reçu à l'intérieur d'une cavité murale formée dans le mur 8.

En variante, le boîtier 4 peut être monté en saillie sur le mur 8.

Le boitier 4 comprend avantageusement des moyens de fixation, tels que des vis, pour assurer sa fixation sur le mur 8.

Par « fixation sur le mur 8 », on entend ici que la prise 2 est destinée à être solidarisée de façon durable et permanente sur le mur 8. En d'autres termes, elle n'est pas destinée à être retirée par un utilisateur, sauf éventuellement lors d'opérations de maintenance. Ainsi, la prise 2 n'est pas assimilable à un adaptateur amovible branché de façon enfichable sur une prise secteur d'un bâtiment.

Le boitier 4 est ici réalisé en matière plastique. Il est avantageusement formé par assemblage d'une ou plusieurs coques séparables.

Le connecteur 6 est adapté pour permettre la connexion électrique d'un appareil électrique en vue d'alimenter électriquement cet appareil, par exemple pour assurer son fonctionnement ou une recharger batterie équipant cet appareil.

Plus précisément, la prise 2 est adaptée pour fournir une tension d'alimentation électrique continue à un appareil externe par l'intermédiaire du connecteur 6.

Dans cet exemple, le connecteur 6 est un connecteur de type USB (« Universal Serial Bus » en langue anglaise).

A titre d'exemple illustratif, le connecteur 6 est ici un connecteur USB de type C permettant de fournir plus de puissance électrique. Le connecteur type C présente aussi l'avantage d'avoir un sens de connexion réversible. Toutefois, en variante, d'autres types de connecteur USB peuvent être utilisés, en particulier le connecteur USB type A plus classique.

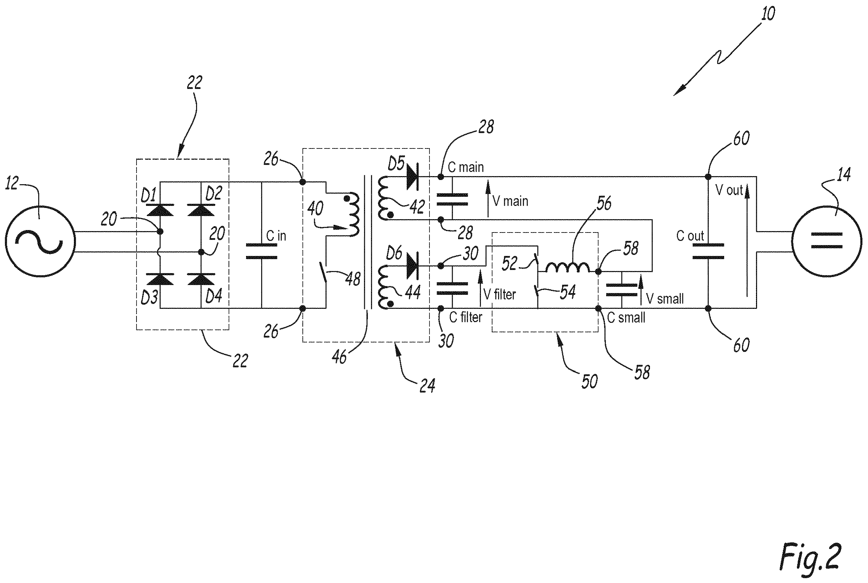

La prise 2 comporte un dispositif d'alimentation électrique 10, dont un exemple set illustré plus en détail sur la figure 2.

Le dispositif 10 est configuré pour être alimenté par une tension électrique alternative et pour fournir, en sortie, sur le connecteur 6, une tension électrique continue stabilisée.

La tension électrique alternative alimentant le dispositif 10 provient par exemple d'un réseau électrique d'alimentation, de type secteur, auquel est connectée la prise 2. Par exemple, la prise 2 est connectée à ce réseau d'alimentation par l'intermédiaire de terminaux de connexion débouchant à l'intérieur de la cavité murale.

Dans cet exemple, le réseau électrique délivre une tension alternative de type 230V à 50Hz. En variante, d'autres valeurs sont possibles, comme une tension alternative de type 110V à 60Hz.

Par exemple, le dispositif 10 est logé à l'intérieur du boitier 4. Dans cet exemple, les composants du dispositif 10 sont montés sur une carte électronique qui est reçue à l'intérieur du boitier 4.

Avantageusement, la prise 2 comporte une unité de commande, non illustrée, pour piloter le fonctionnement du dispositif 10.

En particulier, l'unité de commande est programmée pour fixer la valeur de la tension continue de sortie délivrée sur le connecteur 6, par exemple en fonction d'un signal de commande reçu depuis l'appareil à alimenter. Par exemple, lorsqu'un appareil est connecté sur la prise 2, par l'intermédiaire du connecteur 6, il envoie un signal approprié à destination de l'unité de commande, pour demander à être alimenté avec une tension et un ampérage qui correspondent à des propriétés de cet appareil. En réponse, l'unité de commande choisit une tension de sortie adaptée.

Dans cet exemple, les connecteurs USB sont compatibles avec le standard « USB power delivery ». Ils permettent donc à un appareil de choisir entre plusieurs niveaux d'alimentation électrique, par exemple 5 V avec 1,5 ampères, ou 9 V avec 3 ampères, ou 15 V avec 3 ampères ou encore 20 V avec 5 ampères.

Sur la figure 2, la référence « 12 » représente une source de tension alternative. Dans cet exemple, il s'agit du réseau électrique qui alimente le dispositif 10.

La référence « 14 » représente une charge électrique destinée à être alimenté par une tension électrique continue. Dans cet exemple, la charge 14 représente un appareil électrique connecté à la prise 2, par l'intermédiaire du connecteur 6, en vue de son alimentation et/ou de son rechargement.

Le dispositif 10 comporte ici une entrée 20 comprenant deux bornes électriques connectées à la source 12.

Le dispositif 10 comprend également un redresseur 22 et un premier convertisseur de puissance 24 de type continu-continu, aussi noté DC-DC.

Le redresseur 22 est connecté aux bornes de l'entrée 20 de manière à être alimenté par la source 12. La sortie du redresseur 22 est connectée à une entrée 26 du premier convertisseur 24.

Dans cet exemple, le redresseur 22 est un pont de diodes comprenant quatre diodes D1, D2, D3 et D4.

Le dispositif 10 comprend un premier condensateur de filtrage Cin connecté sur l'entrée 26, entre les bornes de l'entrée 26.

Le premier convertisseur 24 comporte également une première sortie 28 et une deuxième sortie 30, distinctes l'une de l'autre. Lors de son fonctionnement, le premier convertisseur 24 délivre une puissance électrique en sortie sur chacune des sorties 28 et 30.

La puissance électrique moyenne délivrée sur la deuxième sortie 30 est inférieure à la puissance électrique moyenne délivrée sur la première sortie 28. De préférence, la puissance électrique moyenne délivrée sur la deuxième sortie 30 est deux fois inférieure, et de préférence dix fois inférieure à la puissance électrique moyenne délivrée sur la première sortie 28.

De façon avantageuse, le premier convertisseur 24 est isolé galvaniquement. Par exemple, le niveau d'isolation électrique correspond au niveau d'isolation « OVC III » tel que défini par la norme IEC-60664-1 de la Commission Electrotechnique Internationale. Ainsi, le dispositif 10 présente une isolation électrique qui évite de poser des risques aux utilisateurs.

Dans cet exemple, le premier convertisseur 24 est un convertisseur de type « flyback ».

Plus précisément, le premier convertisseur 24 comprend ici un transformateur comportant un bobinage primaire 40, un premier bobinage secondaire 42 et un deuxième bobinage secondaire 44 qui sont enroulés autour d'un noyau ferromagnétique commun 46 du transformateur. De façon connue, ces bobinages, ou solénoïdes, sont formés par enroulement de fils conducteurs autour du noyau 46.

Le bobinage primaire 40 est connecté en série avec un circuit de régulation 48 entre les bornes de l'entrée 26. Le circuit de régulation 48 comporte ici un interrupteur commandable. L'interrupteur est actionné avec une fréquence de commutation prédéfinie, par exemple en étant piloté par l'unité de commande de la prise 2.

A titre d'illustration, la fréquence de commutation du circuit 48 est ici égale à 140kHz.

Le circuit de régulation 48 est ici piloté en fonction d'une tension de régulation, mesurée au moyen d'un bobinage auxiliaire, non illustré, ménagé autour du noyau 46, au primaire du transformateur.

Le premier bobinage 42 est raccordé à la première entrée 28. Avantageusement, une diode D5 est connectée en série avec le premier bobinage 42 de manière à empêcher un transfert de puissance électrique depuis la première sortie 28 vers l'entrée 26.

De façon analogue, le deuxième bobinage 24 est raccordé à la deuxième sortie 30. Avantageusement, une diode D6 est connectée en série avec le deuxième bobinage 44 afin d'éviter tout transfert de puissance électrique depuis la deuxième sortie 30 vers l'entrée 26.

Le dispositif 10 comportant en outre un deuxième condensateur de filtrage Cmain connecté sur la première sortie 28 et un troisième condensateur de filtrage Cfilter connecté sur la deuxième sortie 30.

Plus précisément, les condensateurs Cmain et Cfilter sont connectés en parallèle avec la sortie 28, 30 correspondante, respectivement.

On note « Vmain » la tension électrique aux bornes du deuxième condensateur CMain et on note « Vfilter » la tension électrique aux bornes du troisième condensateur Cfilter.

Le dispositif 10 comporte en outre un deuxième convertisseur de puissance 50 continu - continu, dont l'entrée est raccordée à la deuxième sortie 30.

Avantageusement, la puissance nominale du convertisseur 50 est inférieure à la puissance nominale du premier convertisseur 24. Par exemple, la puissance nominale du deuxième convertisseur 50 est égale à 10% de la puissance nominale du premier convertisseur 24.

Dans cet exemple, le deuxième convertisseur 50 est un convertisseur de type « buck ». De façon connue, ce convertisseur 50 comprend ici des interrupteurs de puissance commandables 52 et 54 associés à une inductance 56.

En variante, le deuxième convertisseur 50 peut être de nature différente. Par exemple, il s'agit d'un convertisseur de type « buck-boost ».

On note « 58 » la sortie du deuxième convertisseur de puissance 50.

Le dispositif 10 comporte en outre un quatrième condensateur de filtrage Csmall qui est connecté sur la sortie 58, en parallèle avec celle-ci. On note « Vsmall » la tension électrique aux bornes de ce quatrième condensateur Csmall.

La première sortie 28 du premier convertisseur 24 et la sortie 58 du deuxième convertisseur 50 sont connectées l'une avec l'autre en série pour former une sortie 60 du dispositif 10.

A titre d'exemple illustratif, la puissance électrique fournie en sortie du dispositif 10 est ici inférieure à 100W.

Dans cet exemple, une première borne de la sortie 60 est raccordée à une première borne de la première sortie 28. Une deuxième borne de la sortie 60 est connectée à une première borne de la sortie 58 du deuxième convertisseur 50. La deuxième borne de la première sortie 28 et la deuxième borne de la sortie 58 du deuxième convertisseur 50 sont raccordées l'une avec l'autre par un conducteur électrique.

Le dispositif 10 comporte en outre un cinquième condensateur de filtrage Cout connecté la sortie 60 en parallèle avec celle-ci. On note « Vout » la tension électrique aux bornes de ce cinquième condensateur Cout. La tension Vout correspond ici à la tension continue qui est délivrée en sortie du dispositif 10à destination d'un appareil électrique correspondant, illustré ici par la charge électrique 14, connecté à la prise par le connecteur 6.

En variante, toutefois, l'un ou l'autre du cinquième condensateur Cout ou du quatrième condensateur Csmall peut être omis.

En d'autres termes, au moins un quatrième condensateur de filtrage Csmall ou Cout est connecté soit à la sortie 58 du deuxième convertisseur soit sur la sortie 60 du dispositif d'alimentation électrique 10.

Lorsque le cinquième condensateur Cout est omis, la tension Vout correspond à la tension électrique entre les bornes de sortie 60. De façon analogue, lorsque le quatrième condensateur Csmall est omis, la tension Vsmall correspond à la tension électrique entre les bornes de la sortie 58.

Du fait de la connexion en série des sorties 28 et 58, la tension Vout est égale à la somme des tensions Vmain et Vsmall.

De préférence, chacun des condensateurs Cin, Cmain, Cfilter, Csmall, Cout présente une capacité qui est inférieure à 1mF et, de préférence, inférieure ou égale à 100µF. En particulier, le premier condensateur Cin présente une capacité inférieure ou égale à 100µF, ici égale à 10µF.

Les condensateurs Cin, Cmain, Cfilter, Csmall, Cout sont ici réalisés en céramique. En variante, ils peuvent être de technologie de type tantale ou polymère ou toute autre technologie équivalente. Ainsi, ces condensateurs Cin, Cmain, Cfilter, Csmall, Cout ne sont pas des condensateurs de technologie aluminium électrolytique.

Dans cette description, pour simplifier, chacun des condensateurs Cin, Cmain, Cfilter, Csmall, Cout est illustré comme un composant unitaire bien qu'en pratique, chaque condensateur Cin, Cmain, Cfilter, Csmall, Cout peut en réalité être formé par une batterie de deux ou plusieurs condensateurs connectés entre eux en parallèle, par exemple au sein d'un même module unitaire.

La régulation du deuxième convertisseur 50 est ici réalisée en mesurant la tension Vsmall en aval du quatrième condensateur Csmall. La fréquence de commutation du convertisseur 50 est ici égale à 1MHz.

Le deuxième convertisseur 50 est adapté, notamment au travers de sa stratégie de régulation, pour que la tension de sortie Vsmall soit, à chaque instant, complémentaire de la tension d'entrée Vfilter. Par exemple, lorsque la tension Vfilter en entrée présente une amplitude maximale, alors la tension de sortie Vsmall présente une amplitude minimale. Lorsque la tension d'entrée Vfilter diminue, la tension de sortie Vsmall augmente en conséquence. De façon analogue, lors que la tension d'entrée Vfilter réaugmente, alors la tension de sortie Vsmall diminue en conséquence, de façon à ce que la tension Vout reste constante et présente le moins de variation et d'ondulation possible.

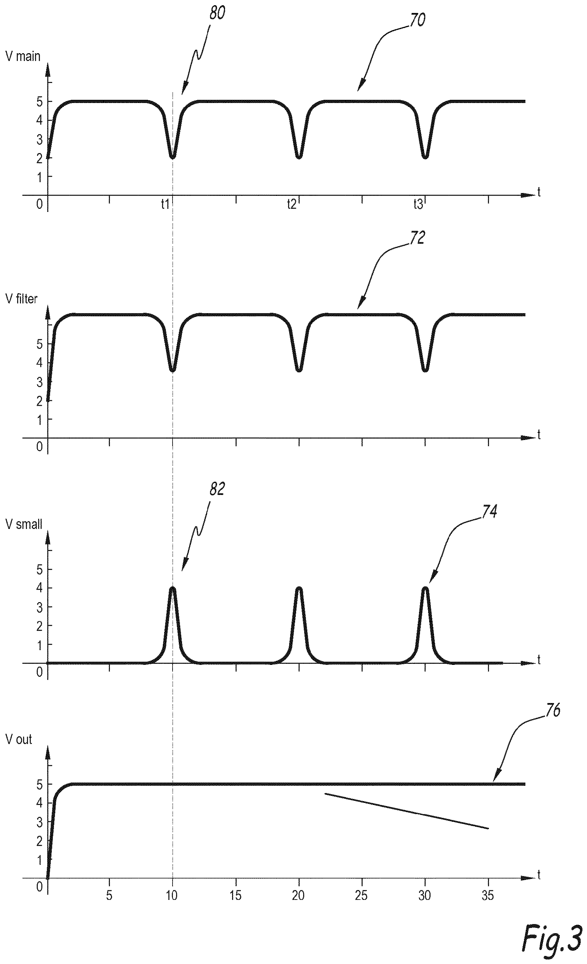

La figure 3 représente schématiquement un exemple de fonctionnement du dispositif 10 au cours du temps.

La courbe 70 représente l'évolution de l'amplitude de la tension Vmain en fonction du temps T. La courbe 72 représente l'évolution de l'amplitude la tension Vfilter en fonction du temps T. La courbe 74 représente l'évolution de l'amplitude de la tension Vsmall en fonction du temps T. Enfin, la courbe 76 représente l'évolution de l'amplitude de la tension de sortie Vout du dispositif 10 en fonction du temps t.

Dans cet exemple illustratif, correspondant au cas d'un réseau électrique d'alimentation délivrant une tension alternative de fréquence 50Hz, les amplitudes sont exprimées en Volt et le temps t est exprimé en millisecondes, avec un pas de 5 millisecondes pour chaque graduation de l'axe des abscisses.

Lors du fonctionnement du dispositif 10, les tensions Vmain et Vfilter délivrées en sortie du premier condensateur 24 présentent amplitude qui diminue périodiquement du fait de chutes de tension en sortie du premier convertisseur 24, qui se produisent lorsque celui-ci ne peut pas maintenir sa puissance délivrée en sortie faute de recevoir une puissance électrique suffisante en entrée, par exemple à chaque fois que la tension alternative reçue sur l'entrée 20 passe par une valeur d'amplitude nulle. Dans l'exemple illustré, ces diminutions se produisent pour les instants notés t1, t2 et t3, ici toutes les 10ms pour un réseau d'entrée 50Hz. L'une de ces diminutions est illustrée sur la courbe 70 par la référence 80.

Le deuxième convertisseur 50 est donc configuré pour, du fait de sa régulation, fournir en sortie une tension qui compense les chutes de tension apparaissant en sortie du premier convertisseur. Ainsi, la tension Vsmall présente des augmentations de valeur pour les instants t1, t2 et t3. L'une de ces augmentations est ici illustrée par la référence 82.

Du fait que les tensions Vmain et Vsmall s'additionnent pour donner la tension de sortie Vout, comme expliqué précédemment, alors l'augmentation 82 vient compenser la chute de tension 80, ce qui permet à la tension de sortie de présenter une valeur essentiellement constante et égale à une valeur de consigne.

On obtient donc ainsi une régulation simple et efficace de la tension de sortie Vout.

Cette régulation est effectuée sans avoir besoin d'utiliser, en entrée du premier convertisseur 24, un filtrage utilisant des condensateurs de capacité importante. Cela rend possible l'utilisation de condensateurs de technologie céramique, qui sont plus fiables et qui occupent moins de place que les condensateurs électrolytique à base d'aluminium communément utilisés. Cela permet au dispositif 10, et donc à la prise 2, d'être plus compacts.

Le rendement énergétique du dispositif 10 est également satisfaisant, par exemple supérieur ou égal à 90%, en dépit du fait que deux convertisseurs de puissance sont connectés en série l'un avec l'autre.

En fait, ici, comme le deuxième convertisseur 50 est connecté sur la deuxième sortie 30 qui ne délivre qu'une faible fraction de la puissance électrique totale délivrée en sortie premier condensateur 24, on limite les pertes du rendement par rapport au cas où le premier convertisseur 24 ne comporterait qu'une seule sortie à laquelle serait connecté le deuxième convertisseur. Dans un tel cas, les pertes propres à chaque convertisseur se cumuleraient totalement, de sorte que le rendement énergétique du dispositif 10 serait bien moindre.

En outre, avec cet arrangement, le deuxième convertisseur 50 peut être plus petit que le premier convertisseur 24. Une conséquence est que cela réduit l'encombrement du deuxième convertisseur 50.

Ainsi, le dispositif 10 présente un encombrement réduit qui facilite l'intégration de la prise 2. En évitant d'utiliser des composants fragiles et présentant une faible durée de vie, la fiabilité du dispositif 10 et de la prise 2, ainsi que leur durée de vie moyenne, sont améliorées par rapport aux prises connues. Les pertes thermiques sont limitées grâce au bon rendement énergétique du dispositif 10, ce qui rend moins critique le problème de l'évacuation de la chaleur dissipée lorsque la prise 2 est encastrée dans un mur 8.

Les modes de réalisation et les variantes envisagés ci-dessus peuvent être combinés entre eux pour générer de nouveaux modes de réalisation.

## Revendications

1. Dispositif d'alimentation électrique (10) pour une prise murale pourvue d'un connecteur électrique, **caractérisé en ce que** ce dispositif d'alimentation électrique comporte :
- un redresseur (22), destiné à être alimenté par une source de tension électrique alternative (12) ;
- un premier convertisseur de puissance (24) continu-continu, comprenant :
• une entrée (26) connectée à la sortie du redresseur ;
• une première sortie (28) et une deuxième sortie (30), la puissance électrique moyenne délivrée sur la deuxième sortie (30) étant inférieure à la puissance électrique moyenne délivrée sur la première sortie (28) ;
- un deuxième convertisseur de puissance (50) continu-continu, l'entrée du deuxième convertisseur de puissance étant raccordée à la deuxième sortie (30) du premier convertisseur de puissance ;
- un premier condensateur (Cin) de filtrage connecté sur l'entrée du premier convertisseur de puissance, un deuxième condensateur (Cmain) de filtrage connecté sur la première sortie (28), un troisième condensateur (Cfilter) de filtrage connecté sur la deuxième sortie (30) ;
et **caractérisé en ce que** la première sortie (28) du premier convertisseur de puissance et la sortie (58) du deuxième convertisseur de puissance sont connectées en série pour former une sortie (60) du dispositif d'alimentation électrique (10) apte à délivrer une tension d'alimentation continue, le dispositif d'alimentation électrique (10) comprenant au moins un quatrième condensateur (Csmall, Cout) de filtrage connecté soit à la sortie (58) du deuxième convertisseur soit sur la sortie (60) du dispositif d'alimentation électrique (10).

2. Dispositif d'alimentation électrique (10) selon la revendication 1, **caractérisé en ce que** le quatrième condensateur (Csmall) de filtrage est connecté sur la sortie (58) du deuxième convertisseur de puissance (50) et **en ce que** le dispositif d'alimentation électrique (10) comprend un cinquième condensateur (Cout) de filtrage connecté sur sa sortie (60).

3. Dispositif d'alimentation électrique (10) selon l'une quelconque des revendications précédentes, **caractérisé en ce que** le premier convertisseur de puissance (24) est un convertisseur de type « flyback ».

4. Dispositif d'alimentation électrique (10) selon l'une quelconque des revendications précédentes, **caractérisé en ce que** le deuxième convertisseur de puissance (50) est un convertisseur de type « buck » ou de type « buck-boost ».

5. Dispositif d'alimentation électrique (10) selon l'une quelconque des revendications précédentes, **caractérisé en ce que** le deuxième convertisseur de puissance (50) est configuré de manière à ce que la tension délivrée en sortie de ce deuxième convertisseur de puissance (50) soit complémentaire à la tension qu'il reçoit sur son entrée.

6. Dispositif d'alimentation électrique (10) selon l'une quelconque des revendications précédentes, **caractérisé en ce que** les condensateurs (Cin, Cmain, Cfilter, Csmall, Cout) sont des condensateurs de technologie céramique ou de technologie tantale ou de technologie polymère.

7. Dispositif d'alimentation électrique (10) selon l'une quelconque des revendications précédentes, **caractérisé en ce que** le premier condensateur (Cin) présente une capacité inférieure à 1 millifarad.

8. Dispositif d'alimentation électrique (10) selon l'une quelconque des revendications précédentes, **caractérisé en ce que** la puissance électrique moyenne délivrée sur la deuxième sortie (30) est au moins deux fois inférieure à la puissance électrique moyenne délivrée sur la première sortie (28), de préférence dix fois inférieure à la puissance électrique moyenne délivrée sur la première sortie (28).

9. Dispositif d'alimentation électrique (10) selon l'une quelconque des revendications précédentes, **caractérisé en ce que** le premier convertisseur de puissance (24) est isolé galvaniquement.

10. Dispositif d'alimentation électrique (10) selon l'une quelconque des revendications précédentes, **caractérisé en ce que** le deuxième convertisseur de puissance (50) présente une puissance nominale inférieure à la puissance nominale du premier convertisseur de puissance (24).

11. Prise murale (2) comprenant :
- un boîtier (4) destiné à être fixé à un mur (8) ;
- un connecteur (6) d'alimentation;
- un dispositif d'alimentation électrique (10) adapté pour alimenter le connecteur (2) à partir d'une tension alternative fournie par un réseau électrique ;
**caractérisée en ce que** le dispositif d'alimentation électrique (10) est selon l'une quelconque des revendications précédentes.

12. Prise murale selon la revendication 11, **caractérisé en ce que** le connecteur (6) d'alimentation est de type USB.
